# EUROPEAN PATENT APPLICATION

(11) **EP 1 841 132 A1**
(43) Date of publication of application: **03.10.2007**
(21) Application number: 06112129.9
(22) Date of filing: 31.03.2006
(51) Int. Cl.: H04L 12/24, H04Q 7/34

(54) **Agent entity, monitoring system and method of obtaining information**

(71) Applicant: Agilent Technologies, Inc., Santa Clara, CA 95051 (US)
(72) Inventor: Bond, David, South Queensferry, Lothian EH30 9TG (GB)
(74) Representative: Coker, David Graeme

(57) **Abstract**

An agent entity (202) resides on a communications handset (116) and, when in use, obtains first information that is programmably accessible by the agent entity (202) from the communications handset (116). Second information, that is not programmably accessible by the agent entity (202), is obtained indirectly by sending the first information in an SMS message to a monitoring server (108), the second information being included in the SMS message automatically as part of the process of generating the SMS message.

## Description

The present invention relates to an agent entity of the type that, for example, resides on a communications terminal for measuring performance in relation to the communications terminal. The present invention also relates to a monitoring system of the type that, for example, measures performance in relation to a communications terminal using an agent entity residing on the communications terminal. The present invention further relates to a method of obtaining information of the type that, for example, includes first information programmably accessible and associated second information that is not programmably accessible.

### Background Art

In the field of network monitoring, it is known for a plurality of communications handsets to reside in a communications network and to use one or more services supported by the communications network. In particular, it is known for a software agent to be supported by a given communications handset in the communications network in order to monitor performance of the communications network from a perspective of a user of the communications handset.

In relation to such monitoring, it is complex for an operator of the communications network to associate information concerning the communications handset used by the user, for example a serial number, such as an International Mobile Equipment Identifier (lMEl) number, or a software version, with a telephone number associated with a Subscriber Identity Module (SIM) card installed in the communications handset.

Use of so-called passive probes, whereby probes are attached to strategic monitoring points in the communications network, to monitor communications passing the strategic monitoring points, can obtain some of the information required. However, this technique requires significant hardware investment.

### Disclosure of Invention

According to a first aspect of the present invention, there is provided an agent entity comprising: a data access module arranged to obtain, when in use, programmably accessible first information associated with a communications apparatus, and to initiate, when in use, communication of a message containing the first information using a messaging service, thereby indirectly procuring second information associated with the first information and the communications apparatus for receipt by a recipient apparatus.

The first information may be expressed in a first form to identify the communications apparatus.

The second information may be expressed in a second form to identify a subscription associated with the communications apparatus.

The messaging service may be a Short Message Service.

The first information may be programmably accessible via an Application Program Interface.

The second information may constitute part of the message.

The message may comprise a source field, the source field comprising the second information.

A subscription may be associated with the communications apparatus; and the data access module may be further arranged to detect a change to data associated with the subscription and to obtain the first information in response to the change to the data.

The message may be sent from the communications apparatus to the communications apparatus.

The entity may further comprise: a monitoring module for monitoring a parameter associated with the communications apparatus, wherein the data access module may be further arranged to obtain the first information in response to or prior to the monitoring module making an initial measurement for monitoring the parameter.

According to a second aspect of the present invention, there is provided a monitoring system comprising: a communications apparatus supporting the agent entity as set forth above in relation to the first aspect of the invention; and a recipient apparatus arranged to receive, when in use, the message and to extract the first information and the second information from the message.

The recipient apparatus may be arranged to associate the first information with the second information.

The system may further comprise a data store arranged to store an association between the first information and the second information in the data store.

The recipient apparatus may be the communications apparatus.

According to a third aspect of the present invention, there is provided a method of obtaining information about a communications apparatus, the method comprising: obtaining programmably accessible first information associated with the communications apparatus; and initiating communication of a message containing the first information using a messaging service, thereby indirectly procuring second information associated with the first information and the communications apparatus for receipt by a recipient apparatus.

It is thus possible to provide an entity, system and method that enables data, and relationships between data, to be kept up-to-date in a simple and elegant manner that is cost-effective. Consequently, data usually complex to access due to a lack of a suitable interface, such as an Application Program Interface (API), can be obtained and associated with other data obtained in relation to a communications apparatus.

### Brief Description of Drawings

At least one embodiment of the invention will now be described, by way of example only, with reference to the accompanying drawings, in which:
**Figure 1** is a schematic diagram of a monitoring system residing in a communications network, the system constituting an embodiment of the invention;
**Figure 2** is a schematic diagram of functional elements of a communications apparatus used in the system of Figure 1; and
**Figure 3** is a flow diagram of a method of obtaining information used in the system of Figure 1.

### Detailed Description

Throughout the following description identical reference numerals will be used to identify like parts.

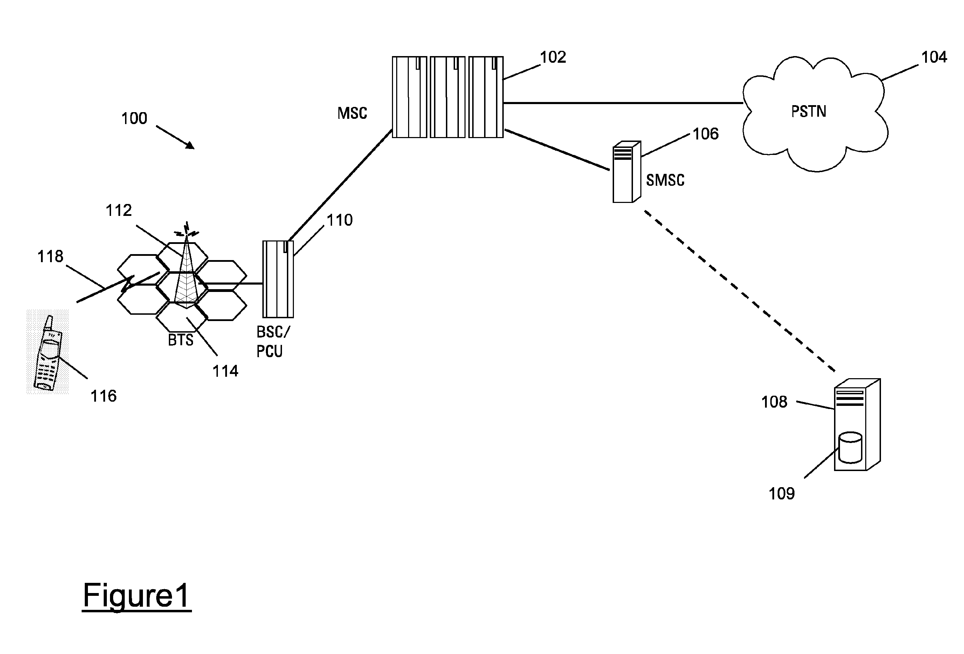

Referring to Figure 1, a monitoring system is implemented in a wireless communications network 100, the communications network 100 being, in this example, a Global Systems for Mobile Communications (GSM) network. The communications network 100 is capable of providing or facilitating voice communication and/or data transactions, services, or communications. The skilled person will, of course, appreciate that other communications networks can be used in place of or overlay the GSM communications network described herein, for example other telecommunication networks such as a Universal Mobile Telecommunications System (UMTS) network, wireless networks, telephone networks and data communication networks.

For the sake of conciseness of description and hence ease of understanding, the GSM communications network is not described in detail and the skilled person will recognise that the GSM communications network comprises other functional and structural aspects not described herein.

Referring again to Figure 1, the communications network 100 comprises a Mobile Switching Centre (MSC) 102 coupled to a Public Switched Telephone Network (PSTN) 104, a Short Messaging Service Centre (SMSC) node 106, and a Base Station Controller (BSC) 110 that also has functionality so as to serve as a Packet Control Unit (PCU) to support a GPRS (not described herein). In this example, the SMSC 106 is capable of communicating with a monitoring server 108, the monitoring server 108 constituting a recipient apparatus and comprising a database 109. The monitoring server 108 is "attached" to an IP network (not shown), thereby enabling communication with the SMSC 106.

The BSC 110 is coupled to a base station 112, the base station 112 supporting a number of cells 114 in one of which a communications apparatus, for example a communications terminal, such as a cellular communications handset 116, is located for communication with the communications network 100. The communications handset 116 is capable of communicating with the base station 112 via a Radio-Frequency (RF) interface 118. The communications handset 116 can be any device having a user interface capability associated with it, a network connectivity capability and an ability to accept software applications such as an agent entity, for example a software probe application, as described later herein. Examples of other communications apparatus include, but are not limited to, wireless communication devices, telematics devices or modules, Personal Computers (PCs), consumer appliances such as set-top boxes, and Personal Digital Assistants (PDAs).

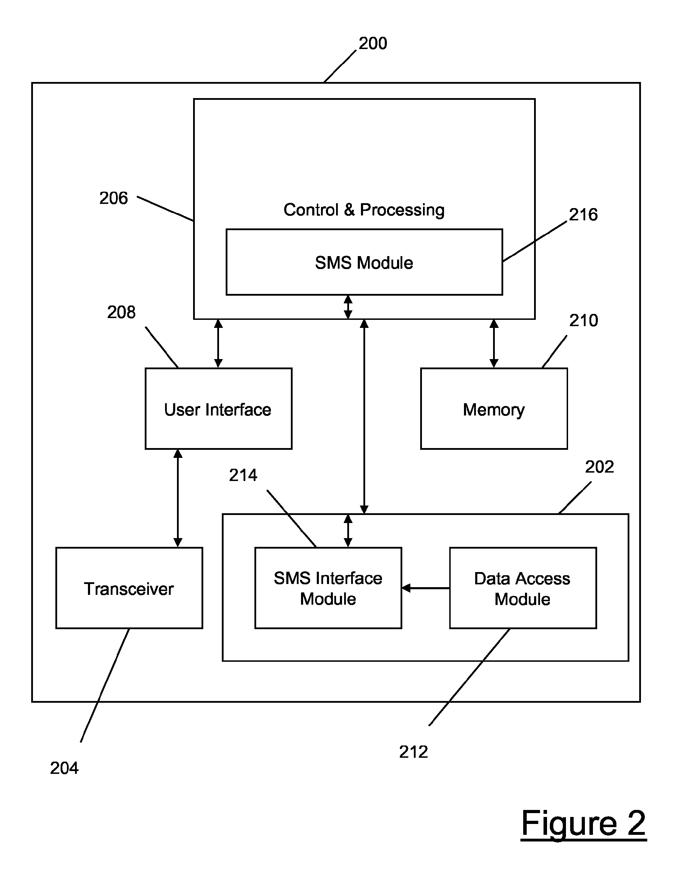

Turning to Figure 2, the communications handset 116 comprises a processing resource 200, such as a chipset, capable of supporting the agent entity 202 and thus functioning as a probe, as well as being operable to function in the communications network 100.

The agent entity 202 is of the type described in US patent publication number US 2003/0134631 A1, but modified to provide the functionality described herein. The skilled person will, of course, realise that some of the functionality of US 2003/0134631 A1 does not have to be employed and is application specific. The agent entity 202 is able to monitor, measure and capture transactions occurring in the communications network 100, as seen from the perspective of a user of the communications handset 116, and then provide this user interaction data to the monitoring server 108. The user interaction data can be network engineering metric data and/or user profile data and can be used to optimise functionality and quality of the communications network 100 as seen by the user of the communications handset 116. Operation and quality of the communications network 100 is managed by a network operator (not shown).

In this example, the processing resource 200 also comprises: a transceiver element 204 having both receiver and transmitter functionality for facilitating communications between the communications handset 116 and the communications network 100; a controller and processing capability, such as embedded JAVA processing, which, together, can be referred to as a control and processing element 206; a user interface element 208, such as a keypad and display screen to allow the user to both send and receive communications and transactions in the communications network 100 via the communications handset 116; and a memory element 210, such as a buffer, for storing, at least temporarily, transaction data that is monitored, measured and captured by the communication device prior to it being transmitted to the monitoring server 108. The user interface element 208 can have an ability to monitor key presses made by the user, recognise voice activity of the user, and an ability to create a data file of the actual user experience on the communications handset 116.

Communications engaged in by the user of the communications handset 116 can be manifested as voice and/or data transactions between the user and the communications network 100 via the user interface 208.

The agent entity 202 is dynamically and remotely configurable so as to be able to monitor, measure and capture at least some portion of the characteristics of the transactions in which the user engages, from the perspective of the user, as user interaction data. The functionality of the agent entity 202 is performed in accordance with a functional definition of the agent entity 202 that is able to be, for example, dynamically and remotely configured, added to, changed, deleted and/or upgraded at will by the network operator or other party interested in controlling operation of the agent entity 202. The user interaction data collected by the agent entity 202 can be, as mentioned above, temporarily stored in the memory 210, the control and processing element 206 providing control of other elements in the communications handset 116 and processing capability required by the agent entity 202.

The agent entity 202 can be considered a third party (3P) application capable of residing and operating within the communications handset 116. The software of the agent entity 202 can be implemented in any desired format, for example an open-development environment that facilitates the development of portable 3P applications. Examples of acceptable application and/or programming platforms and environments suitable for implementation of the probe element include, but are not limited to, the following: Sun JAVA (J2ME), C, C++, Qualcomm Binary Runtime Environment for Wireless (BREW) application environment, Microsoft Windows Mobile, Symbian operating system, or proprietary third party operating system, environment, and/or programming language. The agent entity 202, which can include diagnostic criterion for performing network diagnostics, can be downloaded from the network operator to the communications handset 116 via a communications link (not shown), such as over the Internet. The agent entity 202 can have an identification element, such as a control or serial number, which can be used to associate a particular instantiation of the agent entity 202 with a particular network subscriber or communications device. Of course, if desired, the agent entity 202 can be provided in a pre-configured form in the communications handset 116 as a logic circuit.

A process and timing of collection of user interaction data for a particular communication device is controlled by the functional definition of the software of the agent entity 202, which as mentioned above can be dynamically changed as desired. Collection of data can be initiated in response to occurrence of an event, such as the user turning on the communications handset 116 or a dropped call, and either pre- or post-event collection is selectable for a predetermined period of time bracketing an event, such as 30 seconds within the occurrence of an event. The user interaction data collected can be supplied to various functions in the network, for example customer care, operations, engineering, maintenance functions for use in improving the performance of the communications network.

In this example, the agent entity 202 comprises a data access module 212 capable of communicating with a Short Message Service (SMS) interface module 214, the SMS interface module 214 being capable of communicating with an SMS module 216 supported by the control and processing element 206. The SMS module 208 supports client-side functionality of an SMS supported by the communications network 100.

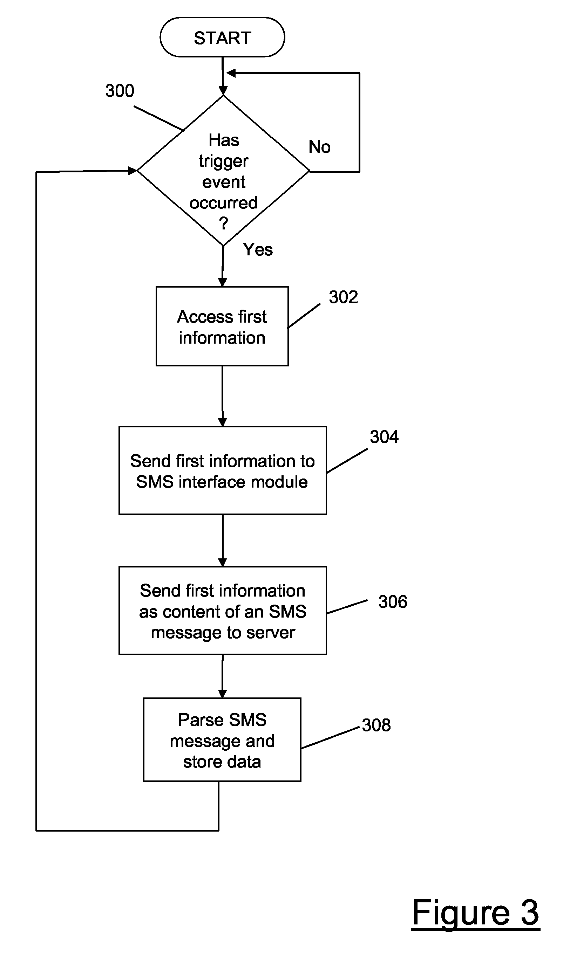

In operation (Figure 3), a monitoring module (not shown) monitors (Step 300) for a trigger event to take place. The trigger event is, in this example, a change to data that has been predetermined of sufficient significance to be reported to the monitoring server 108, for example a change to data associated with a subscription relating to the communications handset 116, such as another line having another Mobile Services Integrated Services Digital Network (MSISDN) associated with the another line detectable by an existing Application Program Interface (API) of the communications handset 116. In this respect, the monitoring server 108 maintains records of data associated with the communications handset 116 (and other communications handsets) in the communications network 100. In this example, it is desirable to maintain associations between first information, for example International Mobile Equipment Identity (IMEI) numbers of communications handsets 116 and second information, for example a telephone number (an MSISDN number) associated with a Subscriber Identity Module (SIM) card connected to the communications handset 116. However, some communications handsets lack a suitable API to enable access by the agent entity 202 to the MSISDN number as is the case in the present example. Hence, the second information is not programmably accessible by the data access module 212, whereas the first information is programmably accessible.

Of course, although in this example the lMEl number is obtained, other handset information can be obtained in addition or alternatively to the lMEl number, for example an identity of a manufacturer of a given communications handset.

Alternatively, or in addition to monitoring for changes to the data of interest to the monitoring server 108, the agent entity 202 can be configured to obtain the information to be reported when the communications handset 116 is powered up or when the agent entity 202 begins to send data in performance of a monitoring task in relation to the communications handset 116, for example as already described above in relation to collection of user interaction data.

The skilled person will appreciate that the monitoring server 108 described above can store data collected by the agent entity 202 in performance of the known monitoring function, in addition to the storage of the association between the first data and the second data. However, this dual function of the monitoring server 108 is not mandatory.

Once the trigger event has been detected, the data access module 204 accesses (Step 302) a local data store (not shown), for example a Electronically Erasable Programmable Read Only Memory (EEPROM) forming part of the memory 210 to retrieve the first information, in this example, the IMEI number of the communications handset 116. Thereafter, the data access module 204 needs to obtain the MSISDN number associated with the communications handset 116 and the IMEI number. Since no direct mechanism is supported by the communications handset 116 to obtain the MSISDN number, the data access module 204 has to obtain the second information by an indirect mechanism, namely by initiating communication of a message using a messaging service supported by the communications handset 116.

Consequently, the data access module 204 communicates the first information to the SMS interface module 206. The SMS interface module 206 then communicates (Step 304) the first information along with a destination MSISDN number associated with the monitoring server 108 to the SMS module 208 of the communications handset 116.

The SMS module 208 then prepares the message so as to include the first information as content of the message and the destination MSISDN number. The message is prepared in accordance with known SMS generation techniques for communications handsets and so will not be described in any further detail herein, other than noting that the SMS module 208 automatically includes the MSISDN number of the communications handset 116 in a source address field of the message in accordance with a normal operating procedure associated with generation of the message. The message is then sent (Step 306) by the communications handset 116.

Of course, the skilled person will appreciate that the agent entity 202 can be configured to initiate sending of the message from the communications handset 116 back to the communications handset 116 via the communications network 100. The first and second information subsequently received by the communications handset 116 can then be send by the agent entity 202 using the existing communications link mentioned above to communicate measurement information to the monitoring server 108.

The message sent by the communications handset 116 is received by the SMSC 106 and processed in accordance with known SMS processing techniques in order to communicate the message to the monitoring server 108. Upon receipt of the message, the monitoring server 108 parses (Step 308) the message to extract the first information from the content of the message and the second information from the source field of the message. The extracted first and second information is then stored in the database 109 in order to record the association between the first and second information and, optionally, a time at which the first and second information is recorded or measured. The first and second information can, of course, replace an existing record of the second information (and associated first information) stored in the database in order to update the existing record. A historic record of changes to associations with the first and/or second data can also be maintained.

Thereafter, the data access module 204 reverts to awaiting a subsequent trigger event (Step 300).

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. An agent entity (202) comprising:
a data access module (212) arranged to obtain, when in use, programmably accessible first information associated with a communications apparatus (116), and to initiate, when in use, communication of a message containing the first information using a messaging service, thereby indirectly procuring second information associated with the first information and the communications apparatus (116) for receipt by a recipient apparatus (108).

2. An entity as claimed in Claim 2, wherein the first information is expressed in a first form to identify the communications apparatus (116).

3. An entity as claimed in Claim 1 or Claim 2, wherein the second information is expressed in a second form to identify a subscription associated with the communications apparatus (116).

4. An entity as claimed in any one of the preceding claims, wherein the messaging service is a Short Message Service.

5. An entity as claimed in any one of the preceding claims, wherein the first information is programmably accessible via an Application Program Interface.

6. An entity as claimed in any one of the preceding claims, wherein the second information constitutes part of the message.

7. An entity as claimed in any one of the preceding claims, wherein the message comprises a source field, the source field comprising the second information.

8. An entity as claimed in any one of the preceding claims, further comprising:
a subscription associated with the communications apparatus (116), wherein the data access module (212) is further arranged to detect a change to data associated with the subscription and to obtain the first information in response to the change to the data.

9. An entity as claimed in any one of Claims 1 to 8, further comprising:
a monitoring module for monitoring a parameter associated with the communications apparatus (116), wherein the data access module (212) is further arranged to obtain the first information in response to or prior to the monitoring module making an initial measurement for monitoring the parameter.

10. A monitoring system comprising:
a communications apparatus (116) supporting the agent entity (202) as claimed in any one of the preceding claims; and
a recipient apparatus (202, 108) arranged to receive, when in use, the message and to extract the first information and the second information from the message.

11. A system as claimed in Claim 10, wherein the recipient apparatus (202, 108) is arranged to associate the first information with the second information.

12. A system as claimed in Claim 10, further comprising a data store (109) arranged to store an association between the first information and the second information in the data store (109).

13. A system as claimed in any one of Claims 10 to 12, wherein the recipient apparatus (202, 108) is the communications apparatus (116).

14. A method of obtaining information about a communications apparatus (116), the method comprising:
obtaining (302) programmably accessible first information associated with the communications apparatus (116); and
initiating (304) communication of a message containing the first information using a messaging service, thereby indirectly procuring second information associated with the first information and the communications apparatus (116) for receipt by a recipient apparatus (202, 108).
